# EUROPÄISCHE PATENTSCHRIFT

(11) **EP 2 457 300 B1**
(45) Veröffentlichungstag und Bekanntmachung des Hinweises auf die Patenterteilung: **23.10.2013**
(21) Anmeldenummer: 10728198.2
(22) Anmeldetag: 24.06.2010
(51) Int. Cl.: H02J 7/00

(54) **HYBRIDES BATTERIESYSTEM**
HYBRID BATTERY SYSTEM
SYSTÈME DE BATTERIES HYBRIDE

(30) Priorität: 20.07.2009 DE 102009027835
(43) Veröffentlichungstag der Anmeldung: 30.05.2012
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2010/058973
(87) Internationale Veröffentlichungsnummer: WO 2011/009690

(56) Entgegenhaltungen:
- JP-A- 11 113 185
- US-A1- 2005 017 682
- US-A1- 2008 185 994

## Beschreibung

### Stand der Technik

Es besteht ein wachsender Bedarf an Batteriesystemen, welche in stationären Anwendungen wie Windkraftanlagen und Notstromsystemen oder aber in Fahrzeugen zum Einsatz kommen sollen. Alle diese Anwendungen stellen hohe Anforderungen an die Zuverlässigkeit und Ausfallsicherheit. Der Grund hierfür ist, dass ein vollständiger Ausfall der Spannungsversorgung durch das Batteriesystem zu einem Ausfall des Gesamtsystems führen kann. So werden bei Windkraftanlagen Batterien eingesetzt, um bei starkem Wind die Rotorblätter zu verstellen und die Anlage vor übermäßigen mechanischen Belastungen zu schützen, die die Windkraftanlage beschädigen oder sogar zerstören könnten. Im Falle des Ausfalls der Batterie eines Elektroautos würde dieses fahruntüchtig. Ein Notstromsystem wiederum soll gerade den unterbrechungsfreien Betrieb z.B. eines Krankenhauses sicherstellen und daher selbst möglich nicht ausfallen können.

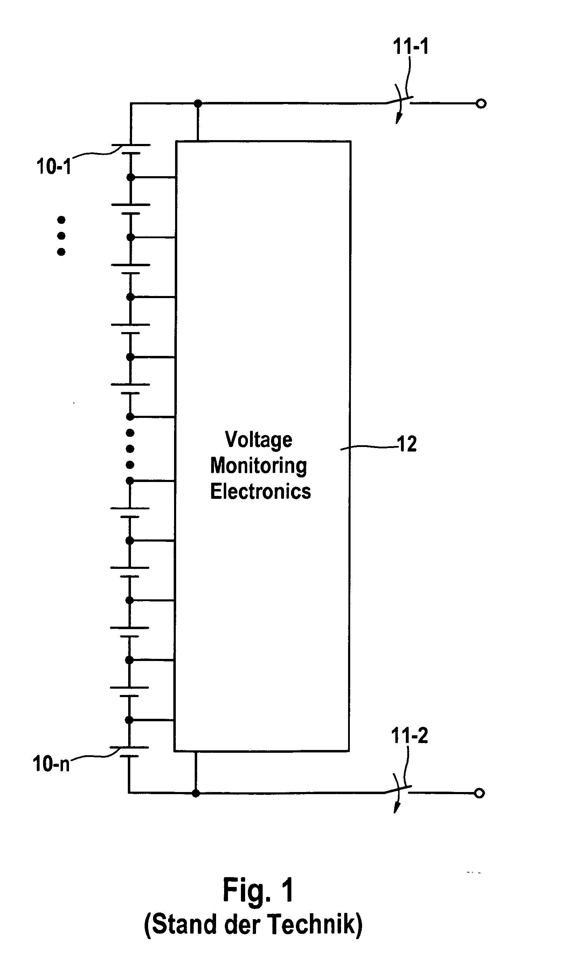

Um die für die jeweilige Anwendung geforderte Leistung und Energie zur Verfügung stellen zu können, werden einzelne Batteriezellen in Serie und teilweise zusätzlich parallel geschaltet. Fig. 1 zeigt ein Prinzipschaltbild für eine Serienschaltung von Batterien. Eine Vielzahl von Batteriezellen 10-1 bis 10-n sind in Serie geschaltet, um die beispielsweise in einem PKW für den Elektromotor erforderliche hohe Betriebsspannung durch Summierung der Spannung der Einzelzellen 10-1,...,10-n zu erreichen. Die hohe Betriebsspannung kann durch ausgangsseitige Schalter 11-1 und 11-2 von den folgenden, nicht dargestellten leistungselektronischen Bauelementen wie Wechselrichtern abgekoppelt werden. Da der gesamte Ausgangsstrom der Batterie aufgrund der Serienschaltung der Batteriezellen 10-1,...,10-n in jeder der Batteriezellen 10-1,...,10-n fließt, wobei der Ladungstransport durch elektrochemikalische Prozesse innerhalb der Batteriezellen 10-1,...,10-n geschieht, bedeutet der Ausfall einer einzigen Batteriezelle im Extremfall, dass die Gesamtanordnung keinen Strom und damit keine elektrische Energie mehr bereitstellen kann. Um einen drohenden Ausfall einer Batteriezelle 10-1,...,10-n rechtzeitig erkennen zu können, wird gewöhnlich ein sog. BatterieManagementsystem 12 verwendet, welches mit beiden Polen jeder der Batteriezellen 10-1,...,10-n verbunden oder verbindbar ist und in regelmäßigen oder wählbaren Abständen Betriebsparameter wie Spannung und Temperatur jeder Batteriezelle 10-1,...,10-n und daraus deren Ladezustand (State of Charge, SoC) bestimmt. Dies bedeutet einen hohen Aufwand bei gleichzeitig geringer Flexibilität der elektrischen Betriebsdaten des Batteriesystems.

Weitere Nachteile der Serienschaltung einer Vielzahl von Batteriezellen sind:
1. Für unterschiedliche Betriebszustände der mit der Batterie zu betreibenden Einrichtung werden Bedingungen für die bereitzustellende Betriebsspannung, den maximalen Strom und die gespeicherte Energie gestellt, welche sich nur dann vereinen lassen, wenn eine höhere Zahl von Batteriezellen gekoppelt wird, als zur Erfüllung der einzelnen Anforderungen eigentlich notwendig wäre. Dies erhöht den Preis und das insbesondere bei einem Elektroauto störende Gewicht und Volumen des Batteriesystems.
2. Die Montage der Batterie, also das Zusammenschalten der einzelnen Zellen, erfolgt wegen der durch die Serienschaltung summierten Spannungen der einzelnen Batteriezellen bei hohen Spannungen bis 1000 V, weshalb ein Austausch der Batterie, einzelner Zellen oder Module nicht in örtlichen Werkstätten bzw. im Falle einer stationären Anwendung nur mit Spezialwerkzeug von besonders ausgebildeten Fachkräften vorgenommen werden kann. Dadurch ergibt sich ein hoher logistischer Aufwand für die Wartung von Batteriesystemen im Fehlerfall.
3. Um das Batteriesystem spannungsfrei zu schalten, d.h. die eigentliche Batterie von der Last zu trennen, müssen Leistungsschalter 11-1 und 11-2 vorgesehen werden, welche typischerweise als Schütze ausgeführt und welche für die zu erwartenden hohen Ströme und Spannungen sehr teuer sind.

### Offenbarung der Erfindung

Die Erfindung macht es sich zur Aufgabe, eine Vorrichtung einzuführen, die die obengenannten Nachteile des Standes der Technik überwinden kann.

Ein erster Aspekt der Erfindung betrifft einen Energieübertrager für ein Batteriesystem, der eine Mehrzahl von DC/DC-Umsetzern mit jeweils einem ersten und einem zweiten Eingang und einem ersten und einem zweiten Ausgang umfasst. Der erste Ausgang eines ersten der DC/DC-Umsetzer ist mit einem ersten Ausgang des Energieübertragers und der zweite Ausgang eines letzten der DC/DC-Umsetzer mit einem zweiten Ausgang des Energieübertragers verbunden. Die ersten und zweiten Eingänge der DC/DC-Umsetzer sind für das Anschließen eines Batteriemoduls ausgebildet. Die DC/DC-Umsetzer sind ausgangsseitig in Serie geschaltet. Erfindungsgemäß verfügt der Energieübertrager eine Mehrzahl von ersten Dioden, von denen eine jede eine mit dem ersten Eingang eines der DC/DC-Umsetzer verbundene Anode und eine mit dem zweiten Eingang eines anderen DC/DC-Umsetzers verbundene Kathode aufweist, so dass die DC/DC-Umsetzer eingangsseitig in Serie geschaltet sind, sowie über eine zweite Diode, welche eine mit dem ersten Eingang des ersten der DC/DC-Umsetzer verbundene Anode und eine mit dem ersten Ausgang des Energieübertragers verbundene Kathode aufweist.

Die Erfindung besitzt den Vorteil, dass die Batteriemodule über die ersten Dioden in Serie und die in Serie geschalteten Batteriemodule über die zweite Diode parallel zu den DC/DC-Umsetzern geschaltet werden. Dadurch wird es möglich, die DC/DC-Umsetzer für eine für die meisten Betriebssituationen ausreichende geringe Leistungsentnahme zu dimensionieren, wodurch die DC/DC-Umsetzer leichter und preiswerter werden. Wird eine hohe Leistung entnommen, wird die von den in Serie geschalteten DC/DC-Umsetzern erzeugte Ausgangsspannung einbrechen und unter die Spannung der in Serie geschalteten Batteriemodule absinken. Dadurch werden die Batteriemodule über die zweite Diode zugeschaltet und stabilisieren die Ausgangsspannung wieder. Die Erfindung ermöglicht so einen guten Kompromiss zwischen den unterschiedlichen Anforderungen an die bereitzustellenden Leistungen für unterschiedliche Betriebszustände. Außerdem ist die Wahl einer je nach Betriebssituation geeigneten Gesamtspannung unter der Voraussetzung der ausreichend geringen Leistungsentnahme durch entsprechende Steuerung der DC/DC-Umsetzer möglich. Auch wird bei niedriger Leistungsentnahme die Ausgangsspannung unabhängig von der Zahl der primärseitig angeschlossenen Batteriezellen. Dadurch kann die Auslegung des Batteriesystems rein nach Energie- und Leistungskriterien unabhängig von der für die jeweilige Anwendung geforderten Gesamtspannung erfolgen. Ein weiterer Vorteil der Anordnung besteht darin, dass die teuren Schütze 11-1 und 11-2 entfallen können, weil die Hochspannung am Batterieausgang durch Abschalten der DC/DC-Umsetzer auf einfache Weise abgeschaltet werden kann.

Der Energieübertrager kann über eine Mehrzahl von ersten Abkoppelschaltern verfügen, über jeweils einen von welchen die Batteriemodule mit den DC/DC-Umsetzern verbindbar sind. Die ersten Abkoppelschalter erlauben es, ein Batteriemodul von dem jeweiligen DC/DC-Umsetzer abzukoppeln und diesen somit spannungsfrei zu schalten. Dadurch wird verhindert, dass das Batteriemodul abhängig von einem Schaltzustand des DC/DC-Umsetzers kurzgeschlossen wird. Vorzugsweise sind die ersten Abkoppelschalter als Relais ausgeführt.

Der Energieübertrager kann zusätzlich zu den ersten Abkoppelschaltern über eine Mehrzahl von zweiten Abkoppelschaltern verfügen, von denen jeweils einer mit den ersten Dioden bzw. der zweiten Diode in Serie geschaltet ist. Die zweiten Abkoppelschalter sind ausgebildet, den ersten Ausgang eines jeweiligen DC/DC-Umsetzers vom ersten Eingang des jeweiligen DC/DC-Umsetzers bzw. den zweiten Eingang eines jeden DC/DC-Umsetzers mit Ausnahme des letzten DC/DC-Umsetzers von dessen zweiten Ausgang abzukoppeln. Die zweiten Abkoppelschalter sind bevorzugt als schnelle Schalter ausgeführt und stellen die Abkopplung der Batteriemodule für den Fall sicher, dass ein erster Abkoppelschalter nicht oder zu langsam schaltet. Dies ist besonders vorteilhaft, wenn die ersten Abkoppelschalter als relativ langsam schaltende Relais ausgeführt sind.

Die DC/DC-Umsetzer sind besonders bevorzugt als bidirektionale, nicht-isolierende DC/DC-Umsetzers, beispielsweise als Hochsetz-/Tiefsetzsteller oder Buck-Boost-Konverter, ausgeführt.

Bei einer bevorzugten Ausführung des Energieübertragers verfügen die DC/DC-Umsetzer jeweils über eine Spule, über erste bis vierte Schalter und einen Kontroller für das Steuern der ersten bis vierten Schalter verfügen, wobei der erste Schalter zwischen den ersten Eingang und einen ersten Anschluss der Spule, der zweite Schalter zwischen den ersten Anschluss der Spule und den zweiten Eingang, der dritte Schalter zwischen einen zweiten Anschluss der Spule und den zweiten Eingang und der vierte Schalter zwischen den zweiten Anschluss der Spule und den ersten Ausgang geschaltet sind. Diese Ausführung eines Buck-Boost-Konverters ist von schaltungstechnisch geringer Komplexität und erlaubt eine einfache Steuerung der zu erzeugenden Ausgangsspannung.

Besonders bevorzugt weist hierbei jeder Kontroller einen ersten Steuereingang für ein erstes Steuersignal auf und ist ausgebildet, auf den Empfang des ersten Steuersignals hin den ersten Ausgang des DC/DC-Umsetzers mit dem zweiten Ausgang des DC/DC-Umsetzers durch Schließen des dritten Schalters und des vierten Schalters elektrisch zu verbinden und den ersten Eingang des DC/DC-Umsetzers durch Öffnen des ersten Schalters abzukoppeln. Diese Ausführungsform erlaubt es, einen DC/DC-Umsetzer im Betrieb selektiv auszuschalten, etwa weil eine Batteriezelle des eingangsseitig angeschlossenen Batteriemoduls defekt ist. Durch das Schließen des dritten Schalters werden der erste und der zweite Ausgang des ausgefallenen DC/DC-Umsetzers leitend miteinander verbunden, so dass in der Gesamtanordnung weiterhin ein Ausgangsstrom fließen kann. Um das Batteriemodul nicht über die Spule kurzzuschließen, wird es gleichzeitig durch Öffnen des ersten Schalters abgekoppelt. Diese Ausführungsform erlaubt daher den Weiterbetrieb der Vorrichtung trotz des Ausfalls einer oder mehrerer Batteriezellen. Außerdem wird ggf. der Austausch eines Batteriemoduls im laufenden Betrieb möglich, ohne dass die Erzeugung der Gesamtspannung unterbrochen werden muss.

Bei einer Fortführung der beiden letztgenannten Ausführungsvarianten verfügt jeder der DC/DC-Umsetzer über einen zweiten Steuereingang für ein zweites Steuersignal und ist ausgebildet, auf den Empfang des zweiten Steuersignals eine Spannung zwischen dem ersten und dem zweiten Ausgang des DC/DC-Umsetzers zu erhöhen. Dadurch wird es möglich, einer-Senkung der Gesamtspannung durch die bereits beschriebene Abschaltung eines einzelnen DC/DC-Umsetzers entgegenzuwirken, so dass weiterhin eine wenigstens näherungsweise unveränderte Gesamtspannung von der verringerten Anzahl DC/DC-Umsetzer bereitgestellt wird. Auch ist es möglich, die Gesamtspannung bei gleichbleibender Anzahl von DC/DC-Umsetzern zu erhöhen und so an eine andere Betriebssituation anzupassen.

Ein zweiter Aspekt der Erfindung führt ein Batteriesystem mit einem Energieübertrager gemäß dem ersten Aspekt der Erfindung und einer Mehrzahl von Batteriemodulen ein. Die Batteriemodule verfügen jeweils über wenigstens eine Batteriezelle. Die Batteriepole der Batteriemodule sind mit einem entsprechenden Eingang der ersten und zweiten Eingänge eines DC/DC-Umsetzer des Energieübertragers lösbar verbunden.

Ein dritter Aspekt der Erfindung betrifft ein Kraftfahrzeug mit einem Energieübertrager gemäß dem ersten Aspekt der Erfindung.

### Kurzbeschreibung der Abbildungen

Die Erfindung wird im folgenden anhand von Abbildungen von Ausführungsbeispielen näher erläutert. Es zeigen:
Fig. 1 eine Batterie mit Batteriemanagementsystem nach dem Stand der Technik;
Fig. 2 ein erstes Ausführungsbeispiel der Erfindung;
Fig. 3 ein Schaltbild eines als Buck-Boost-Konverter ausgeführten DC/DC-Umsetzers; und
Fig. 4 ein zweites Ausführungsbeispiel der Erfindung.

### Ausführliche Beschreibung der Abbildungen

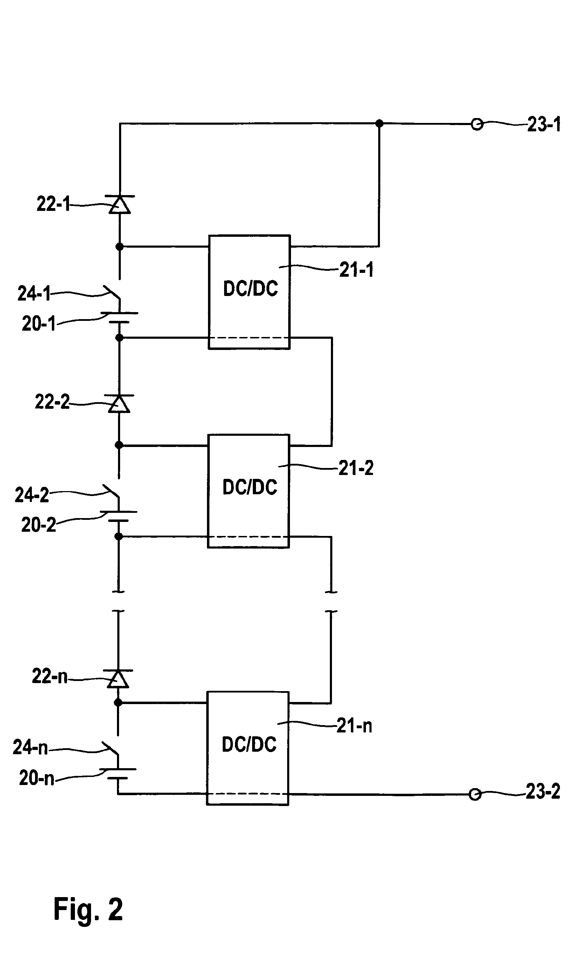

Fig. 2 zeigt ein erstes Ausführungsbeispiel der Erfindung. Eine Mehrzahl von DC/DC-Umsetzern 21-1, 21-2 bis 21-n sind eingangsseitig über eine Mehrzahl von ersten Dioden 22-2 bis 22-n in Serie geschaltet. Jeder der DC/DC-Umsetzer 21-1, 21-2,..., 21-n ist außerdem eingangsseitig mit einem Batteriemodul 20-1, 20-2,..., 20-n verbunden, welche jeweils eine oder mehrere in Serie geschaltete Batteriezellen aufweisen. Wie in Fig. 2 zu sehen, werden die Ausgänge der DC/DC-Umsetzer 21-1, 21-2,..., 21-n in Serie geschaltet, so dass sich die Gesamtspannung zwischen den Ausgängen 23-1 und 23-2 der Anordnung als Summe der von den DC/DC-Umsetzern 21-1, 21-2,..., 21-n erzeugten Einzelspannungen ergibt. Die DC/DC-Umsetzer 21-1, 21-2,..., 21-n sind in bekannter Weise aufgebaut und erlauben ein Einstellen der an den ersten und zweiten Ausgängen eines jeden DC/DC-Umsetzers 21-1, 21-2,..., 21-n anliegenden Ausgangsspannung oder auch das Abschalten der DC/DC-Umsetzer 21-1, 21-2,..., 21-n, so dass keine DC/DC-Umsetzung mehr stattfindet. Dadurch kann die Gesamtspannung an den Ausgängen 23-1 und 23-2 flexibel an die jeweilige Betriebssituation angepasst werden, was einen der Vorteile der Erfindung darstellt. Strichlierte Linien innerhalb der DC/DC-Umsetzer 21-1, 21-2,..., 21-n deuten eine mögliche elektrisch leitende Verbindung zwischen jeweils einem Eingang und einem Ausgang der DC/DC-Umsetzer21-1, 21-2,..., 21-n an. Die Batteriemodule 20-1, 20-2,..., 20-n sind über die ersten Dioden 22-2,..., 22-n und erste Abkoppelschalter 24-1, 24-2,..., 24-n in Serie und über eine zweite Diode 22-1 mit dem ersten Ausgang des ersten DC/DC-Umsetzers 21-1 parallel geschaltet. Dadurch steht die aus den Batteriemodulen zusammengeschaltete Batterie parallel zu den in Serie geschalteten DC/DC-Umsetzern 21-1, 21-2,..., 21-n zur Verfügung. Dies ermöglicht es, die DC/DC-Umsetzer 21-1, 21-2,..., 21-n für relativ geringe Leistungsentnahmen auszulegen, wodurch die DC/DGUmsetzer 21-1, 21-2,..., 21-n kleiner, leichter und preisgünstiger werden. Für die gewöhnlich nur selten auftretenden Betriebszustände, in denen eine höhere Leistung zur Verfügung gestellt werden muss, kann die wie beschrieben parallelgeschaltete Batterie direkt als Quelle dienen. Wird eine solche höhere Leistung entnommen, wird die von den DC/DC-Umsetzern 21-1, 21-2,..., 21-n zwischen den Ausgängen 23-1 und 23-2 erzeugte Spannung einbrechen, bis die zweite Diode 22-1 in Vorwärtsspannung gepolt wird. Dann wird die zweite Diode 22-1 durchschalten und die Batterie die Spannung zwischen den Ausgängen 23-1 und 23-2 stabilisieren. Die Erfindung kombiniert damit die Vorteile einer variablen Erzeugung der Ausgangsspannung unabhängig von der Zahl der eingesetzten Batteriezellen mit einer weiterhin hohen maximal zur Verfügung stehenden Ausgangsspannung, wobei verhältnismäßig geringer Schaltungsaufwand betrieben werden kann. Die ersten Abkoppelschalter 24-1, 24-2,..., 24-n erlauben es, das jeweilige Batteriemodul 20-1, 20-2,..., 20-n von dem zugehörigen DC/DC-Umsetzer 21-1, 21-2,..., 21-n abzukoppeln und diesen spannungsfrei zu schalten. Dies ist insbesondere im Falle des Defektes eines Batteriemoduls 20-1, 20-2,..., 20-n nützlich. In einem solchen Fall sollten zusätzlich der zugehörige DC/DC-Umsetzer 21-1, 21-2,..., 21-n deaktiviert und dessen Ausgänge kurzgeschlossen werden, damit die weitere Funktion der Gesamtanordnung gesichert ist. Zusätzlich oder alternativ ist auch eine entsprechende Bypass-Schaltung für die Eingangsseite des DC/DC-Umsetzers möglich, kann aber entfallen, wenn die DC/DC-Umsetzer 21-1, 21-2,..., 21-n eine leitende Verbindung zwischen dem zweiten Eingang und dem zweiten Ausgang aufweisen.

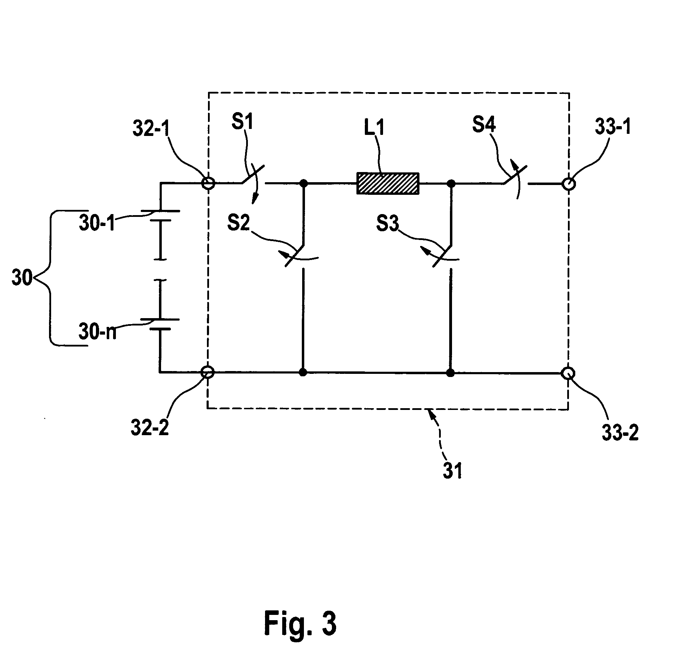

Fig. 3 zeigt ein Schaltbild eines bekannten als Buck-Boost-Konverter ausgeführten DC/DC-Umsetzers 31. Zwischen einen ersten Eingang 32-1 und einen zweiten Eingang 32-2 kann ein Batteriemodule 30 mit einer oder mehreren Batteriezellen 30-1 bis 30-n lösbar angeschlossen werden. Der DC/DC-Umsetzer 31 verfügt über erste bis vierte Schalter S1, S2, S3, S4 und eine Spule L1. Der DC/DC-Umsetzer besitzt einen ersten und einen zweiten Ausgang 33-1, 33-2 und ist ausgebildet, zwischen diesen Ausgängen 33-1, 33-2 eine Gleichspannung zu erzeugen, deren Betrag nach bekannter Weise durch Wählen der Schaltperioden der ersten bis vierten Schalter S1, S2, S3, S4 unabhängig von der Gleichspannung des Batteriemoduls 30 einstellbar ist. Im einfachsten Fall wird der Buck-Boost-Konverter abwechselnd in zwei verschiedenen Zuständen betrieben. In einem Ladezustand werden der erste Schalter S1 und der dritte Schalter S3 geschlossen (also in den leitenden Zustand gebracht) und der zweite Schalter S2 und der vierte Schalter S4 geöffnet (also in den nicht-leitenden Zustand gebracht). Aus dem Batteriemodul 30 fließt in der Folge ein Strom durch die Spule L1, welcher ein Magnetfeld in der Spule L1 aufbaut. In einem Entladevorgang werden nun der erste Schalter S1 und der dritte Schalter S3 geöffnet und der zweiten Schalter S2 und der vierten Schalter S4 geschlossen. Dadurch wird das Batteriemodul 30 von der Spule L1 getrennt und deren Eingang mit dem Minuspol des Batteriemoduls 30 und deren Ausgang mit dem ersten Ausgang 33-1 verbunden. Da die Spule L1 der Änderung des durch sie fließenden Stromes entgegenwirkt, speist sie aus ihrem Magnetfeld einen Ausgangsstrom und baut es dabei ab. Wird dieser Prozess schnell wiederholt, stellt sich zwischen den Ausgängen 33-1, 33-2 eine Gleichspannung ein, deren Größe unter anderem von der Häufigkeit der Wiederholung abhängig ist.

Nicht dargestellt ist ein Kontroller, der die Taktung der Schalters S1 bis S4 an die Betriebssituation anpasst. Auch ist es üblich, dass eine Rückkopplung vorgesehen wird, bei der die an den Ausgängen 33-1, 33-2 anliegende Ausgangsspannung bestimmt und zur Anpassung der Taktung der Schalter S1 bis S4 verwendet wird, so dass sich eine möglichst stabile Ausgangsspannung ergibt. Zur besseren Glättung der Ausgangsspannung kann zwischen den Ausgängen 33-1, 33-2 ein Pufferkondensator vorgesehen sein. Im Rahmen der Erfindung erlauben diese Eigenschaften von DC/DC-Umsetzern die Einstellung einer je nach Betriebssituation gewünschten Gesamtspannung der erfindungsgemäßen Anordnung oder auch das Abschalten eines oder aller DC/DC-Umsetzer. Besonders vorteilhaft kann der DC/DC-Umsetzer 31 deaktiviert werden, indem die Schalter S3 und S4 geschlossen und die Schalter S1 und S2 geöffnet werden.

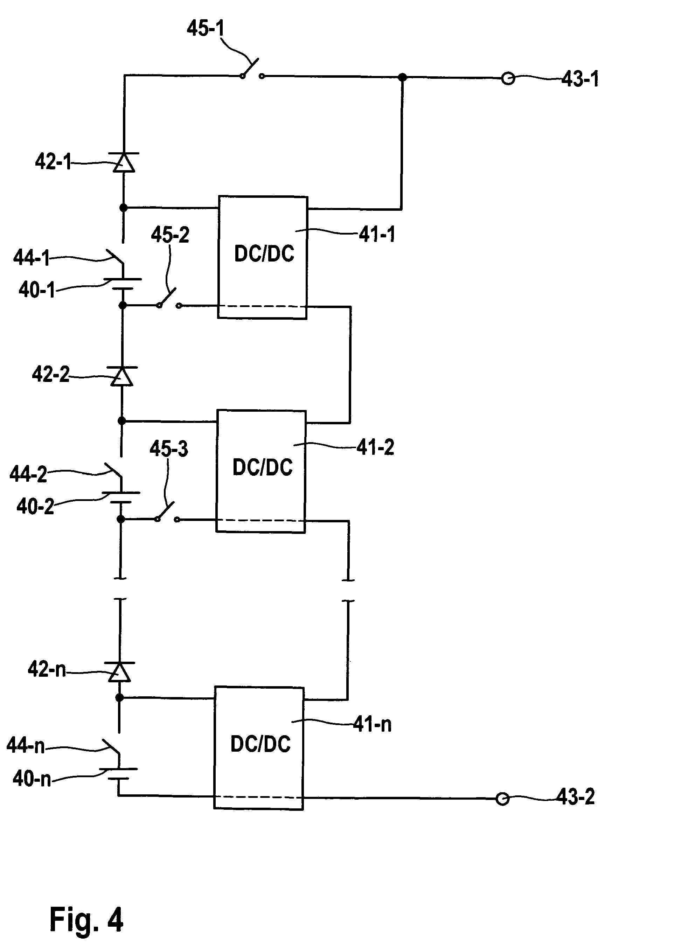

Fig. 4 zeigt ein zweites Ausführungsbeispiel der Erfindung, das ähnlich dem ersten Ausführungsbeispiel aufgebaut ist und entsprechend funktioniert. Als einziger Unterschied sind zusätzlich zweite Abkoppelschalter 45-1, 45-2, 45-3 eingefügt, die die durch eine strichlierte Linie innerhalb der DC/DC-Umsetzer 41-1, 41-2,..., 41-n angedeutete leitende Verbindung zwischen den zweiten Eingängen und zweiten Ausgängen der DC/DC-Umsetzer 41-1, 41-2,..., 41-n für den Fall des oben beschriebenen Deaktivierens eines DC/DC-Umsetzers 41-1, 41-2,..., 41-n aufgrund eines Defektes eines Batteriemoduls 40-1, 40-2,..., 40-n unterbrechen sollen. Die zweiten Abkoppelschalter sind dabei bevorzugt als schnelle Schalter wie z.B. Leistungstransistoren ausgelegt und können die Batteriemodule 40-1, 40-2,..., 40-n abkoppeln, falls einer der bevorzugt als verhältnismäßig langsame Relais ausgeführten ersten Abkoppelschalter 44-1, 44-2,..., 44-n nicht oder nicht schnell genug öffnet. Ein zweiter Abkoppelschalter wird für den letzten DC/DC-Umsetzer 41-n nicht benötigt.

## Patentansprüche

1. Ein Energieübertrager für ein Batteriesystem, der Energieübertrager umfassend eine Mehrzahl von DC/DC-Umsetzern (21-1, 21-2, 21-n, 31, 41-1, 41-2, 41-n) mit jeweils einem ersten und einem zweiten Eingang (32-1, 32-2) und einem ersten und einem zweiten Ausgang (33-1, 33-2), wobei der erste Ausgang (33-1) eines ersten der DC/DC-Umsetzer (21-1, 41-1) mit einem ersten Ausgang (23-1, 43-1) des Energieübertragers und der zweite Ausgang (33-2) eines letzten der DC/DC-Umsetzer (21-n, 41-n) mit einem zweiten Ausgang (23-2, 43-2) des Energieübertragers verbunden sind, wobei die ersten und zweiten Eingänge (32-1, 32-2) für das Anschließen eines Batteriemoduls (20-1, 20-2, 20-n, 30, 40-1, 40-2, 40-n) ausgebildet sind und wobei die DC/DC-Umsetzer (21-1, 21-2, 21-n, 31, 41-1, 41-2, 41-n) ausgangsseitig in Serie geschaltet sind, **gekennzeichnet durch** eine Mehrzahl von ersten Dioden (22-2, 22-n, 42-2, 42-n), von denen eine jede eine mit dem ersten Eingang (32-1) eines der DC/DC-Umsetzer (21-1, 21-2, 21-n, 31, 41-1, 41-2, 41-n) verbundene Anode und eine mit dem zweiten Eingang (32-2) eines anderen DC/DC-Umsetzers (21-1, 21-2, 21-n, 31, 41-1, 41-2, 41-n) verbundene Kathode aufweist, so dass die DC/DC-Umsetzer (21-1, 21-2, 21-n, 31, 41-1, 41-2, 41-n) eingangsseitig in Serie geschaltet sind, und eine zweite Diode (22-1, 42-1), welche eine mit dem ersten Eingang (32-1) des ersten der DC/DC-Umsetzer (21-1, 41-1) verbundene Anode und eine mit dem ersten Ausgang (23-1, 43-1) des Energieübertragers verbundene Kathode aufweist.

2. Der Energieübertrager von Anspruch 1, **gekennzeichnet durch** eine Mehrzahl von ersten Abkoppelschaltern (24-1, 24-2, 24-n, 44-1, 44-2, 44-n), wobei die Batteriemodule (20-1, 20-2, 20-n, 30, 40-1, 40-2, 40-n) über jeweils einen der ersten Abkoppelschalter (24-1, 24-2, 24-n, 44-1, 44-2, 44-n) mit den DC/DC-Umsetzern (21-1, 21-2, 21-n, 31, 41-1, 41-2, 41-n) verbindbar sind.

3. Der Energieübertrager von Anspruch 2, bei dem die ersten Abkoppelschalter (24-1, 24-2, 24-n, 44-1, 44-2, 44-n) als Relais ausgeführt sind.

4. Der Energieübertrager von einem der Ansprüche 2 oder 3, **gekennzeichnet durch** eine Mehrzahl von zweiten Abkoppelschaltern (45-1, 45-2, 45-3), von denen jeweils einer mit den ersten Dioden (22-2, 22-n, 42-2, 42-n) und der zweiten Diode (22-1, 42-1) in Serie geschaltet und ausgebildet ist, den ersten Ausgang (33-1) eines jeweiligen DC/DC-Umsetzers (21-1, 21-2, 21-n, 31, 41-1, 41-2, 41-n) vom ersten Eingang (32-1) des jeweiligen DC/DC-Umsetzers (21-1, 21-2, 21-n, 31, 41-1, 41-2, 41-n) abzukoppeln.

5. Der Energieübertrager von einem der vorhergehenden Ansprüche, bei dem die DC/DC-Umsetzer (21-1, 21-2, 21-n, 31, 41-1, 41-2, 41-n) als bidirektionale, nicht-isolierende DC/DC-Umsetzer, vorzugsweise als Hochsetz-/Tiefsetzsteller oder Buck-Boost-Konverter, ausgeführt sind.

6. Der Energieübertrager von einem der vorhergehenden Ansprüche, bei dem die DC/DC-Umsetzer (21-1, 21-2, 21-n, 31, 41-1, 41-2, 41-n) jeweils über eine Spule (L1), über erste bis vierte Schalter (S1, S2, S3, S4) und einen Kontroller für das Steuern der ersten bis vierten Schalter (S1, S2, S3, S4) verfügen, wobei der erste Schalter (S1) zwischen den ersten Eingang (32-1) des DC/DC-Umsetzers (21-1, 21-2, 21-n, 31, 41-1, 41-2, 41-n) und einen ersten Anschluss der Spule (L1), der zweite Schalter (S2) zwischen den ersten Anschluss der Spule (L1) und den zweiten Eingang (32-2) des DC/DC-Umsetzers (21-1, 21-2, 21-n, 31, 41-1, 41-2, 41-n), der dritte Schalter (S3) zwischen einen zweiten Anschluss der Spule (L1) und den zweiten Eingang (32-2) des DC/DC-Umsetzers (21-1, 21-2, 21-n, 31, 41-1, 41-2, 41-n) und der vierte Schalter (S4) zwischen den zweiten Anschluss der Spule (L1) und den ersten Ausgang (33-1) des DC/DC-Umsetzers (21-1, 21-2, 21-n, 31, 41-1, 41-2, 41-n) geschaltet sind.

7. Der Energieübertrager von Anspruch 6, bei dem jeder Kontroller einen ersten Steuereingang für ein erstes Steuersignal aufweist und ausgebildet ist, auf den Empfang des ersten Steuersignals hin den ersten Ausgang (33-1) des DC/DC-Umsetzers (21-1, 21-2, 21-n, 31, 41-1, 41-2, 41-n) mit dem zweiten Ausgang (33-2) des DC/DC-Umsetzers (21-1, 21-2, 21-n, 31, 41-1, 41-2, 41-n) durch Schließen des dritten Schalters (S3) und des vierten Schalters (S4) elektrisch zu verbinden und den ersten Eingang (32-1) des DC/DC-Umsetzers (21-1, 21-2, 21-n, 31, 41-1, 41-2, 41-n) durch Öffnen des ersten Schalters (S1) abzukoppeln.

8. Der Energieübertrager von einem der Ansprüche 6 oder 7, bei dem jeder Kontroller einen zweiten Steuereingang für ein zweites Steuersignal aufweist und ausgebildet ist, auf den Empfang des zweiten Steuersignals hin eine Spannung zwischen dem ersten und dem zweiten Ausgang (33-1, 33-2) des DC/DC-Umsetzers (21-1, 21-2, 21-n, 31, 41-1, 41-2, 41-n) zu erhöhen.

9. Ein Batteriesystem mit einem Energieübertrager nach einem der vorhergehenden Ansprüche und einer Mehrzahl von Batteriemodulen (20-1, 20-2, 20-n, 30, 40-1, 40-2, 40-n), welche jeweils über wenigstens eine Batteriezelle (30-1, 30-2, ..., 30-n) verfügen und deren Batteriepole mit einem entsprechenden Eingang der ersten und zweiten Eingänge (32-1, 32-2) eines DC/DC-Umsetzer (21-1, 21-2, 21-n, 31, 41-1, 41-2, 41-n) des Energieübertragers lösbar verbunden sind.

10. Ein Kraftfahrzeug mit einem Energieübertrager nach einem der Ansprüche 1 bis 8.

## Claims

1. Energy transmitter for a battery system, with the energy transmitter comprising a plurality of DC/DC converters (21-1, 21-2, 21-n, 31, 41-1, 41-2, 41-n) in each case having a first and a second input (32-1, 32-2) and a first and a second output (33-1, 33-2), with the first output (33-1) of a first of the DC/DC converters (21-1, 41-1) being connected to a first output (23-1, 43-1) of the energy transmitter, and with the second output (33-2) of the last of the DC/DC converters (21-n, 41-n) being connected to a second output (23-2, 43-2) of the energy transmitter, with the first and second inputs (32-1, 32-2) being designed for connection of a battery module (20-1, 20-2, 20-n, 30, 40-1, 40-2, 40-n), and with the DC/DC converters (21-1, 21-2, 21-n, 31, 41-1, 41-2, 41-n) being connected in series on the output side, **characterized by** a plurality of first diodes (22-2, 22-n, 42-2, 42-n), in each case one of which has an anode which is connected to the first input (32-1) of one of the DC/DC converters (21-1, 21-2, 21-n, 31, 41-1, 41-2, 41-n), and a cathode which is connected to the second input (32-2) of another DC/DC converter (21-1, 21-2, 21-n, 31, 41-1, 41-2, 41-n), such that the DC/DC converters (21-1, 21-2, 21-n, 31, 41-1, 41-2, 41-n) are connected in series on the input side, and the second diode (22-1, 42-1), which has an anode, which is connected to the first input (32-1) of the first of the DC/DC converters (21-1, 41-1), and a cathode which is connected to the first output (23-1, 43-1) of the energy transmitter.

2. Energy transmitter from Claim 1, **characterized by** a plurality of first decoupling switches (24-1, 24-2, 24-n, 44-1, 44-2, 44-n), wherein the battery modules (20-1, 20-2, 20-n, 30, 40-1, 40-2, 40-n) can be connected by in each case one of the first decoupling switches (24-1, 24-2, 24-n, 44-1, 44-2, 44-n) to the DC/DC converters (21-1, 21-2, 21-n, 31, 41-1, 41-2, 41-n).

3. Energy transmitter from Claim 2, in which the first decoupling switches (24-1, 24-2, 24-n, 44-1, 44-2, 44-n) are in the form of relays.

4. Energy transmitter from one of Claims 2 or 3, **characterized by** a plurality of second decoupling switches (45-1, 45-2, 45-3), one of which is in each case connected in series with the first diodes (22-2, 22-n, 42-2, 42-n) and the second diode (22-1, 42-1) and is designed to decouple the first output (33-1) of a respective DC/DC converter (21-1, 21-2, 21-n, 31, 41-1, 41-2, 41-n) from the first input (32-1) of the respective DC/DC converter (21-1, 21-2, 21-n, 31, 41-1, 41-2, 41-n).

5. Energy transmitter from one of the preceding claims, in which the DC/DC converters (21-1, 21-2, 21-n, 31, 41-1, 41-2, 41-n) are in the form of bidirectional, non-isolating DC/DC converters, preferably step-up/step-down converters, or Buck-Boost converters.

6. Energy transmitter from one of the preceding claims, in which the DC/DC converters (21-1, 21-2, 21-n, 31, 41-1, 41-2, 41-n) each have a coil (L1), first to fourth switches (S1, S2, S3, S4) and a controller for controlling the first to fourth switches (S1, S2, S3, S4), with the first switch (S1) being connected between the first input (32-1) of the DC/DC converter (21-1, 21-2, 21-n, 31, 41-1, 41-2, 41-n) and a first connection of the coil (L1), with the second switch (S2) being connected between the first connection of the coil (L1) and the second input (32-2) of the DC/DC converter (21-1, 21-2, 21-n, 31, 41-1, 41-2, 41-n), with the third switch (S3) being connected between a second connection of the coil (L1) and the second input (32-2) of the DC/DC converter (21-1, 21-2, 21-n, 31, 41-1, 41-2, 41-n), and with the fourth switch (S4) being connected between the second connection of the coil (L1) and the first output (33-1) of the DC/DC converter (21-1, 21-2, 21-n, 31, 41-1, 41-2, 41-n).

7. Energy transmitter from Claim 6, in which each controller has a first control input for a first control signal and is designed to electrically connect the first output (33-1) of the DC/DC converter (21-1, 21-2, 21-n, 31, 41-1, 41-2, 41-n) to the second output (33-2) of the DC/DC converter (21-1, 21-2, 21-n, 31, 41-1, 41-2, 41-n) by closing the third switch (S3) and the fourth switch (S4), and to decouple the first input (32-1) of the DC/DC converter (21-1, 21-2, 21-n, 31, 41-1, 41-2, 41-n) by opening the first switch (S1), in response to the reception of the first control signal.

8. Energy transmitter from one of Claims 6 or 7, in which each controller has a second control input for a second control signal and is designed to increase a voltage between the first and the second outputs (33-1, 33-2) of the DC/DC converter (21-1, 21-2, 21-n, 31, 41-1, 41-2, 41-n) in response to the reception of the second control signal.

9. Battery system having an energy transmitter according to one of the preceding claims and having a plurality of battery modules (20-1, 20-2, 20-n, 30, 40-1, 40-2, 40-n) which each have at least one battery cell (30-1, 30-2, ..., 30-n) and whose battery poles are detachably connected to a corresponding input of the first and second inputs (32-1, 32-2) of a DC/DC converter (21-1, 21-2, 21-n, 31, 41-1, 41-2, 41-n) of the energy transmitter.

10. Motor vehicle having an energy transmitter according to one of Claims 1 to 8.

## Revendications

1. Dispositif de transfert d'énergie pour un système de batteries, le dispositif de transfert d'énergie comprenant une pluralité de convertisseurs CC/CC (21-1, 21-2, 21-n, 31, 41-1, 41-2, 41-n) ayant chacun une première et une deuxième entrée (32-1, 32-2) et une première et une deuxième sortie (33-1, 33-2), la première sortie (33-1) d'un premier des convertisseurs CC/CC (21-1, 41-1) étant raccordée à une première sortie (23-1, 43-1) du dispositif de transfert d'énergie et la deuxième sortie (33-2) d'un dernier des convertisseurs CC/CC (21-n, 41-n) étant raccordée à une deuxième sortie (23-2, 43-2) du dispositif de transfert d'énergie, la première et la deuxième entrée (32-1, 32-2) étant réalisées pour le raccordement d'un module de batteries (20-1, 20-2, 20-n, 30, 40-1, 40-2, 40-n) et les convertisseurs CC/CC (21-1, 21-2, 21-n, 31, 41-1, 41-2, 41-n) étant montés en série du côté de la sortie, **caractérisé par** une pluralité de premières diodes (22-2, 22-n, 42-2, 42-n), dont chacune présente une anode connectée à la première entrée (32-1) de l'un des convertisseurs CC/CC (21-1, 21-2, 21-n, 31, 41-1, 41-2, 41-n) et une cathode connectée à la deuxième entrée (32-2) d'un autre convertisseur CC/CC (21-1, 21-2, 21-n, 31, 41-1, 41-2, 41-n), de telle sorte que les convertisseurs CC/CC (21-1, 21-2, 21-n, 31, 41-1, 41-2, 41-n) soient montés en série du côté de l'entrée, et une deuxième diode (22-1, 42-1), qui présente une anode connectée à la première entrée (32-1) du premier des convertisseurs CC/CC (21-1, 41-1) et une cathode connectée à la première sortie (23-1, 43-1) du dispositif de transfert d'énergie.

2. Dispositif de transfert d'énergie selon la revendication 1, **caractérisé par** une pluralité de premiers commutateurs de découplage (24-1, 24-2, 24-n, 44-1, 44-2, 44-n), les modules de batteries (20-1, 20-2, 20-n, 30, 40-1, 40-2, 40-n) pouvant être connectés aux convertisseurs CC/CC (21-1, 21-2, 21-n, 31, 41-1, 41-2, 41-n) à chaque fois par le biais de l'un des premiers commutateurs de découplage (24-1, 24-2, 24-n, 44-1, 44-2, 44-n).

3. Dispositif de transfert d'énergie selon la revendication 2, dans lequel les premiers commutateurs de découplage (24-1, 24-2, 24-n, 44-1, 44-2, 44-n) sont réalisés sous forme de relais.

4. Dispositif de transfert d'énergie selon la revendication 2 ou 3, **caractérisé par** une pluralité de deuxièmes commutateurs de découplage (45-1, 45-2, 45-3), dont à chaque fois l'un est monté en série avec les premières diodes (22-2, 22-n, 42-2, 42-n) et la deuxième diode (22-1, 42-1) et est réalisé de manière à découpler la première sortie (33-1) d'un convertisseur CC/CC respectif (21-1, 21-2, 21-n, 31, 41-1, 41-2, 41-n) de la première entrée (32-1) du convertisseur CC/CC respectif (21-1, 21-2, 21-n, 31, 41-1, 41-2, 41-n).

5. Dispositif de transfert d'énergie selon l'une quelconque des revendications précédentes, dans lequel les convertisseurs CC/CC (21-1, 21-2, 21-n, 31, 41-1, 41-2, 41-n) sont réalisés sous forme de convertisseurs CC/CC bidirectionnels non isolants, de préférence sous forme de convertisseurs élévateurs/abaisseurs ou de convertisseurs Buck-Boost.

6. Dispositif de transfert d'énergie selon l'une quelconque des revendications précédentes, dans lequel les convertisseurs CC/CC (21-1, 21-2, 21-n, 31, 41-1, 41-2, 41-n) disposent chacun d'une bobine (L1), de premier à quatrième commutateurs (S1, S2, S3, S4) et d'un contrôleur pour commander les premier à quatrième commutateurs (S1, S2, S3, S4), le premier commutateur (S1) étant monté entre la première entrée (32-1) du convertisseur CC/CC (21-1, 21-2, 21-n, 31, 41-1, 41-2, 41-n) et une première borne de la bobine (L1), le deuxième commutateur (S2) étant monté entre la première borne de la bobine (L1) et la deuxième entrée (32-2) du convertisseur CC/CC (21-1, 21-2, 21-n, 31, 41-1, 41-2, 41-n), le troisième commutateur (S3) étant monté entre une deuxième borne de la bobine (L1) et la deuxième entrée (32-2) du convertisseur CC/CC (21-1, 21-2, 21-n, 31, 41-1, 41-2, 41-n), et le quatrième commutateur (S4) étant monté entre la deuxième borne de la bobine (L1) et la première sortie (33-1) du convertisseur CC/CC (21-1, 21-2, 21-n, 31, 41-1, 41-2, 41-n).

7. Dispositif de transfert d'énergie selon la revendication 6, dans lequel chaque contrôleur présente une première entrée de commande pour un premier signal de commande et est réalisé, pour connecter électriquement, à la réception du premier signal de commande, la première sortie (33-1) du convertisseur CC/CC (21-1, 21-2, 21-n, 31, 41-1, 41-2, 41-n) à la deuxième sortie (33-2) du convertisseur CC/CC (21-1, 21-2, 21-n, 31, 41-1, 41-2, 41-n) en fermant le troisième commutateur (S3) et le quatrième commutateur (S4), et pour découpler la première entrée (32-1) du convertisseur CC/CC (21-1, 21-2, 21-n, 31, 41-1, 41-2, 41-n) en ouvrant le premier commutateur (S1).

8. Dispositif de transfert d'énergie selon les revendications 6 ou 7, dans lequel chaque contrôleur présente une deuxième entrée de commande pour un deuxième signal de commande et est réalisé pour augmenter, à la réception du deuxième signal de commande, une tension entre la première et la deuxième sortie (33-1, 33-2) du convertisseur CC/CC (21-1, 21-2, 21-n, 31, 41-1, 41-2, 41-n).

9. Système de batteries comprenant un dispositif de transfert d'énergie selon l'une quelconque des revendications précédentes et une pluralité de modules de batteries (20-1, 20-2, 20-n, 30, 40-1, 40-2, 40-n), lesquels disposent à chaque fois d'au moins une cellule de batterie (30-1, 30-2, ..., 30-n) et dont les pôles de batterie sont connectés de manière amovible à une entrée correspondante des première et deuxième entrées (32-1, 32-2) d'un convertisseur CC/CC (21-1, 21-2, 21-n, 31, 41-1, 41-2, 41-n) du dispositif de transfert d'énergie.

10. Véhicule automobile comprenant un dispositif de transfert d'énergie selon l'une quelconque des revendications 1 à 8.
